# EUROPÄISCHE PATENTSCHRIFT

(11) **EP 1 682 788 B1**
(45) Veröffentlichungstag und Bekanntmachung des Hinweises auf die Patenterteilung: **17.01.2007**
(21) Anmeldenummer: 04797764.0
(22) Anmeldetag: 10.11.2004
(51) Int. Cl.: F16D 33/02, F16D 33/06

(54) **ANFAHREINHEIT**
STARTING UNIT
UNITE DE DEMARRAGE

(30) Priorität: 14.11.2003 DE 10353554
(43) Veröffentlichungstag der Anmeldung: 26.07.2006
(73) Patentinhaber: Voith Turbo GmbH & Co. KG, 89522 Heidenheim (DE)
(72) Erfinder: MENNE, Achim, 74564 Crailsheim (DE)
(74) Vertreter: Dr. Weitzel & Partner
(86) Internationale Anmeldenummer: PCT/EP2004/012700
(87) Internationale Veröffentlichungsnummer: WO 2005/050046

(56) Entgegenhaltungen:
- WO-A-00/55519
- DE-A1- 19 917 893
- US-A- 2 731 119
- US-A- 3 952 508

## Beschreibung

Die Erfindung betrifft eine Anfahreinheit, im Einzelnen mit den Merkmalen aus dem Oberbegriff des Anspruches 1.

Anfahreinheiten, umfassend eine hydrodynamische Kupplung, insbesondere eine steuer- bzw. regelbare hydrodynamische Kupplung sind in einer Vielzahl von Ausführungen aus dem Stand der Technik bekannt. Die Anfahreinheit umfasst dabei einen mit einem Antrieb koppelbaren Eingang und einem mit einem Abtrieb koppelbaren Ausgang. Zwischen dem Eingang und dem Ausgang ist die hydrodynamische Kupplung, umfassend ein Primärschaufelrad und ein Sekundärschaufelrad, die miteinander einen torusförmigen Arbeitsraum bilden, angeordnet. Dem Primärschaufelrad ist dabei eine sogenannte Primärradschale zugeordnet, welche drehfest mit diesem verbunden ist und das Sekundärschaufelrad in axialer Richtung vollständig in Umfangsrichtung umschließt. Die Anfahreinheit umfasst des weiteren eine schaltbare Kupplung in Form einer Überbrückungskupplung, welche zur hydrodynamischen Kupplung parallel angeordnet ist und mit dieser gemeinsam oder für sich allein schaltbar ist. Dies bedeutet, dass über die beiden Kupplungen zwei Leistungszweige erzeugt werden, wobei der Leistungsfluss entweder allein über jeweils eine der Kupplungen oder aber gemeinsam über beide erfolgt. Die schaltbare Kupplung umfasst dabei wenigstens ein Kupplungseingangselement und ein Kupplungsausgangselement, wobei das Kupplungsausgangselement wenigstens mittelbar drehfest mit dem Sekundärschaufelrad gekoppelt ist. Das Kupplungseingangselement ist wenigstens mittelbar drehfest mit dem Primärrad bzw. dem Eingang E verbunden. Die Mittel zur Erzeugung eines Reibschlusses zwischen den einzelnen Kupplungselementen umfassen dabei ein mit Druckmittel beaufschlagbaren Kolbenelement. Dies kann separat den Kupplungsscheiben zugeordnet werden oder aber bei einer besonders kompakten Ausführungsform wird dieses direkt vom Sekundärschaufelrad gebildet. Der hydrodynamischen Kupplung ist ein Betriebsmittelversorgungssystem zugeordnet. Die Kupplung kann durch dieses zentrifugal und zentripetal durchströmt werden. Bei zentripetaler Durchströmung wird das Betriebsmittel über den Betriebsmittelzufuhrkanal entlang des Außenumfanges des Sekundärschaufelrades geführt und in radialer Richtung im Bereich des Außendurchmessers des torusförmigen Arbeitsraumes in diesen eingebracht. Dabei wird die durch das Betriebsmittel erzeugte Kraft genutzt, um die schaltbare Kupplung im gelösten Zustand zu halten bzw. zumindest nur mit Schlupf zu betreiben. Der Austritt aus dem torusförmigen Arbeitsraum erfolgt dabei im Bereich des radial inneren Durchmessers des Arbeitsraumes in einen darunter liegenden Raum, welcher auch als zweiter Betriebsmittelführungskanal oder -raum bezeichnet wird. Beide, der durch den Innenumfang des Gehäuses und den Außenumfang des Sekundärschaufelrades begrenzte erste Betriebsmittelführungskanal und/oder -raum sowie der zweite Betriebsmittelzufuhrkanal oder -raum können dabei hinsichtlich ihrer Funktion vertauscht werden. Dies ist insbesondere bei Umschaltung auf eine zentrifugale Durchströmung erforderlich. Dann erfolgt eine Zufuhr des Betriebsmittels zur hydrodynamischen Kupplung über den zweiten Betriebsmittelführungskanal und/oder -raum in dem Bereich des radial inneren Durchmessers des torusförmigen Arbeitsraumes, wobei der Austritt im Bereich des radial äußeren Durchmessers des torusförmigen Arbeitsraumes an einem der Schaufelräder erfolgt. Die schaltbare Kupplung wird dann betätigt. Bei derartigen Anfahreinheiten können somit über die einzelnen Kupplungen - schaltbare Kupplung oder hydrodynamische Kupplung - übertragbaren Leistungsanteile variiert werden. Dabei ist es insbesondere beim Betrieb der hydrodynamischen Kupplung wünschenswert, dass beim Einsatz als Anfahreinheit gerade im Anlaufbereich, d. h. im Bereich sehr hohen Schlupfes zur Vermeidung einer negativen Rückwirkung auf die Drehzahl der Antriebsmaschine das durch die hydrodynamische Kupplung aufnehmbare Moment, welches dem vom Primärschaufelrad aufnehmbaren Moment entspricht, möglichst gering zu halten. Dies kann zum einen durch Einstellung eines minimalen Füllungsgrades realisiert werden, wobei es sich jedoch gezeigt hat, dass diese Maßnahme allein nicht ausreicht, da gerade im Bereich sehr hohen Kupplungsschlupfes zwischen einschließlich 70 und 100%, d. h. dementsprechend niedriges Drehzahlverhältnis zwischen dem Sekundärschaufelrad und dem Primärschaufelrad noch zu hohe Momente durch die Kupplung aufgenommen werden. Dadurch kann es zu einer unerwünschten Rückwirkung auf die Drehzahl der mit der hydrodynamischen Kupplung gekoppelten Antriebsmaschine kommen, so dass hier die gewünschte Fahrdynamik nicht gegeben ist.

Der Erfindung liegt daher die Aufgabe zugrunde, eine hydrodynamische Kupplung für den Einsatz in Anfahreinheiten der eingangs genannten Art zu schaffen, bei welcher mit geringsten konstruktiven und steuerungstechnischen Aufwand eine Minimierung des Leerlaufmomentes, d. h. insbesondere des durch die hydrodynamische Kupplung bei maximalen Schlupf aufnehmbaren Momentes erzielbar ist.

Dokument US 2,731,119 zeigt eine Anfahreinheit nach dem Oberbegriff des Anspruchs 1.

Die erfindungsgemäße Lösung wird durch die Merkmale des Anspruches 1 charakterisiert. Vorteilhafte Ausgestaltungen sind in den Unteransprüchen widergegeben.

Erfindungsgemäß werden bei einer Anfahreinheit mit einem mit einem Antrieb koppelbaren Eingang und einem mit dem Abtrieb koppelbaren Ausgang, zwischen denen ein Anfahrelement in Form eines hydrodynamischen Bauelementes angeordnet ist und dem eine schaltbare Kupplung zur Überbrückung zugeordnet ist, Mittel zur Beeinflussung des Übertragungsverhaltens des hydrodynamischen Bauelementes vorgesehen, die in Form von Druckmittel betätigbaren mechanischen Einbauten vorliegen, die wenigstens mittelbar auf den sich im Arbeitsraum zwischen Primärschaufelrad und Sekundärschaufelrad einstellenden Arbeitskreislauf wirken. Die druckmittelbetätigten Einbauten werden dabei mit einem Differenzdruck aus dem Druck in einem Betriebsmittelführungskanal oder-raum zum Arbeitsraum, einem mit dem Betriebsmittelführungskanal gekoppelten Raum oder einer Verbindungsleitung und einem im Gehäuse vorliegenden Druck beaufschlagt. Die Anfahreinheit umfasst dazu ein Gehäuse, welches wenigstens ein Schaufelrad, insbesondere das Sekundärschaufelrad in axialer Richtung unter Bildung eines Nebenraumes, in welchem die schaltbare Kupplung angeordnet ist, umschließt. Die der Kupplung zugeordnete Stelleinrichtung begrenzt dabei einen ersten Betriebsmittelfürungskanal oder -raum. Dieser ist wenigstens mittelbar, d. h. direkt oder über weitere Verbindungskanäle oder -leitungen mit dem Arbeitsraum der hydrodynamischen Kupplung sowie einer Betriebsmittelquelle verbunden. Ferner vorgesehen ist ein weiterer zweiter Betriebsmittelführungskanal oder -raum, der mit dem Arbeitsraum im Bereich von dessen Innendurchmesser gekoppelt ist. Beide Betriebsmittelführungskanäle oder -räume sind mit einem Betriebsmittelversorgungssystem gekoppelt. Entsprechend der Zuordnung dieser Kanäle oder Räume zur Zufuhr oder Abfuhr von Betriebsmittel zum oder vom Arbeitsraum wird eine zentripetale oder zentrifugale Durchströmung der hydrodynamischen Kupplung realisiert. Bei zentripetaler Durchströmung wird gleichzeitig die schaltbare Kupplung deaktiviert bzw: mit hohem Schlupf betrieben, indem das Betriebsmittel zwischen den miteinander in Wirkverbindung bringbaren Elementen geführt wird und diese aufgrund des Druckes auseinander hält oder aber das Betriebsmittel in entsprechender Weise auf die der schaltbaren Kupplung zugeordnete Stelleinrichtung wirkt.

Mit der erfindungsgemäßen Lösung wird es möglich, ohnehin vorhandene Leitungen und Kanäle bzw. zur Beaufschlagung einer Stelleinrichtung zu nutzen, wobei auch hier immer nur dann eine Beaufschlagung der mechanischen Einbauten erfolgt, wenn tatsächlich die hydrodynamische Kupplung betätigt wird, d. h. bei zentripetaler Durchströmung. Im Zustand zentrifugaler Durchströmung findet dann in der Regel keine Beaufschlagung der Stelleinrichtung statt. Die Betätigung der Stelleinrichtung ist somit direkt über die Kopplung mit dem als Zufuhrkanal oder -raum bei zentripetaler Durchströmung genutzten ersten Betriebsmittelführungskanal oder -raum an die Betätigung der hydrodynamischen Kupplung gekoppelt. Der Stellweg der mechanischen Einbauten ist dabei eine Funktion der Drücke im ersten Betriebsmittelführungskanal oder -raum bzw. einem mit diesen gekoppelten Kanal oder Raum und dem im Gehäuse vorhandenen Innendruck. Dabei können die mechanischen Einbauten vorzugsweise im Anfahrbereich, d. h. bei sehr hohen Schlupfwerten zum Tragen, während diese bei Verringerung des Schlupfes in eine Position geringerer Beeinflussung des Strömungskreislaufes zurückverbracht werden. Vorzugsweise wird deren Wirkung in geringeren Schlupfbereichen vollständig eliminiert.

Die mechanischen Einbauten können dabei auf einem beliebigen Durchmesser zwischen dem Innendurchmesser und dem Außendurchmesser des Arbeitsraumes wirksam werden. Die Wirksamkeit ergibt sich dabei durch Erstreckung in den Arbeitskreislauf hinein, wobei die durch die mechanischen Einbauten bedingten Störstellen oder Flächen in einem Winkel zum sich im Arbeitskreislauf einstellenden Strömungskreislauf in diesem Zustand ausgerichtet sind.

Bezüglich der Ausbildung der einzelnen mechanischen Einbauten bestehen keinerlei Restriktionen. Diese können als beliebig gestaltete Elemente, die geeignet sind, den Strömungskreislauf im Arbeitsraum zu beeinflussen, ausgeführt sein. Vorzugsweise werden jedoch bolzen- oder wenigstens teilringförmige Elemente, vorzugsweise ringförmige Elemente verwendet. Deren wirksame Fläche erstreckt sich dabei über wenigstens einen Teilbereich in Umfangsrichtung. Es besteht dabei die Möglichkeit, lediglich ein Element zu verwenden oder aber eine Mehrzahl von in Umfangsrichtung zueinander beabstandeten Elementen, wie dies insbesondere für Bolzenelemente in Betracht gezogen wird. Die konkrete Wahl der erforderlichen Maßnahme hängt von der gewünschten Änderung der Momentenaufnahme bei einem gewünschten Füllungsgrad ab. Grundsätzlich besteht die Möglichkeit, mechanische Einbauten als separate, in den Arbeitsraum einführbare Elemente zu gestalten oder aber diese in besonders vorteilhafter Weise, da mit minimaler Anzahl zusätzlicher Bauteile realisierbar, von den einzelnen Schaufelrädern selbst zu bilden. Im letztgenannten Fall wird dabei ein Teilbereich der die Strömung im Arbeitsraum führenden Wände in axialer Richtung verschiebbar ausgeführt, wenn es sich dabei um einen ringförmigen Wandbereich handelt. Bei Ausführungen der Schaufelräder mit in Umfangsrichtung unterteilten Segmenten ist auch eine Verschiebbarkeit in radialer Richtung möglich.

Die mechanischen Einbauten werden je nach ihrer Ausführung im Zustand zentripetaler Durchströmung entweder in den Arbeitsraum eingebracht bzw. hinein verschoben oder bei Ausgestaltung dieser als Bestandteil eines der Schaufelräder vom jeweiligen Schaufelrad weggeschoben. Diesbezüglich ist bei der Ausgestaltung der Stelleinrichtung auf die Wirkungsrichtung des sich vom ersten Betriebsmittelführungskanal oder -raum fortpflanzenden Druckes zu achten bzw. auf die Größe.

Die den mechanischen Einbauten zugeordneten Stelleinrichtungen sind dabei vorzugsweise gemäß einer besonders vorteilhaften Ausgestaltung immer an dem Schaufelrad gelagert, welchem die mechanischen Einbauten zugeordnet sind. Bei Zuordnung zum Primärschaufelrad erfolgt die Lagerung dann an diesem oder am mit dem Primärschaufelrad drehfest gekoppelten Gehäuse. Dies bedeutet, dass die Stelleinrichtung immer mit gleicher Drehzahl zum Schaufelrad, insbesondere Primärschaufelrad rotiert und somit keine Differenzen aufgrund des Schlupfes möglich sind. Dies gilt in Analogie auch für das Sekundärrad.

Eine weitere Möglichkeit besteht darin, die Stelleinrichtung an der der schaltbaren Kupplung zugeordneten Stelleinrichtung, insbesondere dem Kolben, der mit dem Primärschaufelrad oder Sekundärschaufelrad drehfest verbindbar ist, zu lagern. Dies hängt jedoch von der räumlichen Anordnung von Primär- und Sekundärschaufelrad und der gewünschten Wirkung der mechanischen Einbauten ab. Bei räumlicher Vorschaltung des Sekundärrades in axialer Richtung vor dem Primärrad ist dies jedoch nur dann sinnvoll, wenn die Stelleinrichtung mechanische Einbauten im Sekundärschaufelrad beaufschlagt.

Grundsätzlich gilt, dass die mechanischen Einbauten sowohl am Primärschaufelrad als auch am Sekundärschaufelrad angeordnet und geführt werden können, wobei entsprechend der Wahl der Führung der mechanischen Einbauten auch die Anordnung der Stelleinrichtung erfolgt. Es ist dabei immer anzustreben, dass zwischen den Elementen, an denen die Stelleinrichtung gelagert ist und dem entsprechenden Schaufelrad kein Schlupf vorherrscht. In diesem Fall genügt bei Herausnahme der mechanischen Einbauten aus dem Arbeitsraum der bündige Abschluss mit dem Innenumfang der Innenwand des jeweiligen Schaufelrades.

Die Stelleinrichtung ist im einfachsten Fall als Zylinder-Kolbeneinheit ausgeführt. Der Zylinder bzw. die den Kolben aufnehmende Arbeitskammer wird dabei dann von der Wand des Gehäuses der Primärradschale oder aber der Stelleinrichtung der schaltbaren Kupplung gebildet. Die Verbindungsleitung zur Arbeitskammer kann dabei in der Wand des Gehäuses über Zwischenräume, die Wandung oder über eine separate Leitung an der Stelleinrichtung der schaltbaren Kupplung geführt werden.

Bezüglich der Ausführung und Anordnung der Zylinder-Kolbeneinheit bestehen eine Vielzahl von Möglichkeiten. Die Anlenkung der Verbindung zu den mechanischen Einbauten erfolgt immer derart, dass die gewünschte Verschiebungsrichtung je nach Ausführung als Ringschieber oder Bolzen oder Schaufelradsegment erzielt wird. Die Beaufschlagung erfolgt dabei vorzugsweise in Verschiebungsrichtung. Je nachdem erfolgt die Führung des aus dem ersten Betriebsmittelführungskanal oder -raum oder einem mit diesen gekoppelten Kanal.

Die erfindungsgemäße Lösung wird nachfolgend anhand von Figuren erläutert. Darin ist im Einzelnen folgendes dargestellt:
- Die Figur 1: verdeutlicht in schematisch vereinfachter Darstellung das Grundprinzip des Aufbaus einer erfindungsgemäß gestalteten Anfahreinheit;
- Figur 2: verdeutlicht eine Ausführung erfindungsgemäß vorgesehener mechanischer Einbauten am Primärschaufelrad;
- Figur 3: verdeutlicht eine weitere Ausführung erfindungsgemäß vorgesehener mechanischer Einbauten am Sekundärschaufelrad;
- Figur 4: verdeutlicht eine weitere Ausführung erfindungsgemäß vorgesehener mechanischer Einbauten am Primärschaufelrad;
- Figur 5: verdeutlicht eine weitere Ausführung erfindungsgemäß vorgesehener mechanischer Einbauten am Sekundärschaufelrad mit deren Beaufschlagung.

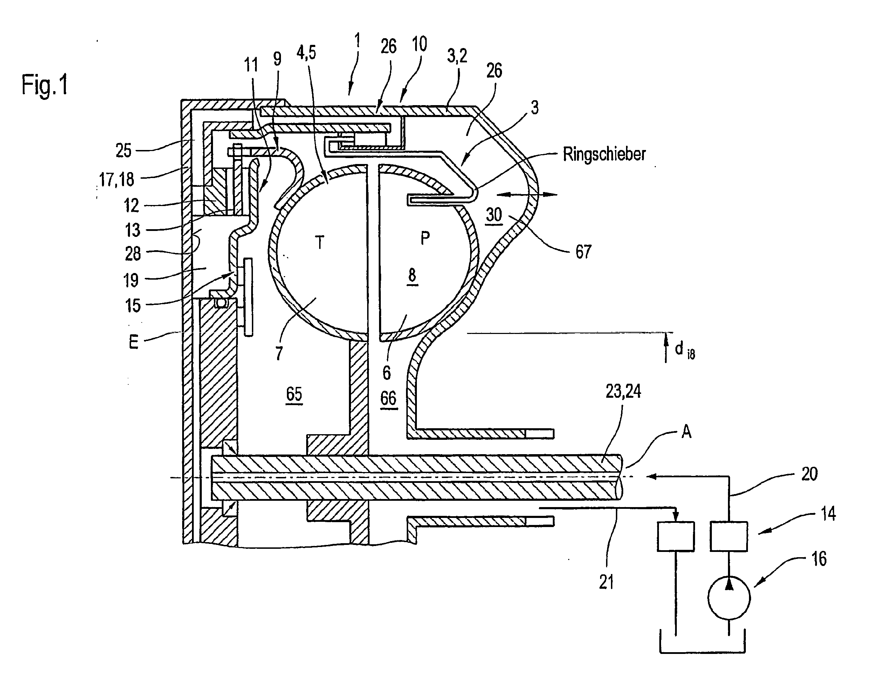

Die Figur 1 verdeutlicht in schematisch vereinfachter Darstellung anhand eines Axialschnittes durch eine Anfahreinheit 1 das Grundprinzip der erfindungsgemäßen Beaufschlagung von Mitteln zur Beeinflussung des Übertragungsverhaltens 2 in Form von druckgesteuerten mechanischen Einbauten 3. Die Anfahreinheit 1 umfasst einen mit einem Antrieb koppelbaren Eingang E und einen mit nachgeschalteten Übersetzungsstufen oder einem Abtrieb koppelbaren Ausgang A. Die Anfahreinheit 1 umfasst ferner ein Anfahrelement 4. Im vorliegenden Fall ist dieses in Form einer hydrodynamischen Kupplung 5 mit zwei Schaufelrädern, einem als Pumpenrad fungierenden Primärrad 6 und einem als Turbinenrad fungierenden Sekundärrad 7, die miteinander einen mit Betriebsmittel befüllbaren Arbeitsraum 8 bilden, ausgeführt. Die hydrodynamische Kupplung 5 ist frei von einem Leitrad und fungiert lediglich als Drehzahlwandler zwischen dem Eingang E und dem Ausgang A. Das Primärrad 6 ist dazu mit dem Eingang und das Sekundärrad 7 mit dem Ausgang A verbunden oder wird von diesen gebildet. Die Anfahreinheit 1 umfasst des weiteren eine parallel zum Anfahrelement 4 in Form der hydrodynamischen Kupplung 5 schaltbare Kupplung 9. Hydrodynamische Kupplung 5 und schaltbare Kupplung 9 sind entweder jeweils separat oder aber gemeinsam schaltbar. Die hydrodynamische Kupplung 5 und die schaltbare Kupplung 9 sind somit in zwei unterschiedlichen Leistungszweigen angeordnet, einem ersten Leistungszweig 10 und einem zweiten Leistungszweig 11. Der erste Leistungszweig 10 ermÖglicht dabei die Leistungsübertragung über die hydrodynamische Kupplung 5 und der zweite Leistungszweig 11 die Leistungsübertragung über die schaltbare Kupplung 9. Die schaltbare Kupplung 9 umfasst mindestens zwei miteinander in Wirkverbindung bringbare Kupplungselemente, vorzugsweise in Form von Kupplungsscheiben, d. h. in Kraftflussrichtung zwischen dem Eingang E und dem Ausgang A der Anfahreinheit 1 betrachtet ein erstes Kupplungselement, welches auch als Kupplungseingang 12 bezeichnet werden kann und ein zweites Kupplungselement, das auch als Kupplungsausgang 13 bezeichnet wird. Vorzugsweise ist die Kupplung als Lamellenkupplung ausgeführt. Die Wirkverbindung durch Reibschluss zwischen dem Kupplungseingang 12 und dem Kupplungsausgang 13 kann dabei direkt oder indirekt realisiert werden. Im erstgenannten Fall wird die Reibschluss direkt zwischen Kupplungseingang und Kupplungsausgang erzeugt, während im zweiten Fall weitere Reibflächen tragende Elemente zwischengeschaltet werden.

Zum Zwecke der Leistungsaufteilung ist jedem Übertragungselement - hydrodynamischer Kupplung 5 und schaltbarer Kupplung 9 - eine eigene Stelleneinrichtung, hier lediglich als Blackbox in Form einer Ventilanordnung für die hydrodynamische Kupplung mit 14 angedeutet und 15 für die schaltbare Kupplung 9 in Form eines Kolbens zugeordnet, welche die Schaltbarkeit gewährleisten. Die Schaltbarkeit der schaltbaren Kupplung 9 wird durch Erzeugung eines entsprechenden Anpressdruckes gewährleistet, die Schaltbarkeit der hydrodynamischen Kupplung 5 beispielsweise durch Befüllung und Entleerung des Arbeitsraumes 8, wobei zur Betätigung der Stelleinrichtung 15 wiederum die Stelleinrichtung 14 herangezogen wird. Die Steuerung der übertragbaren Leistungsanteile über den ersten und/oder zweiten Leistungszweig 10 bzw. 11 erfolgt durch Steuerung bzw. Variation der Anpresskraft an der schaltbaren Kupplung 9 und Steuerung der Position der mechanischen Einbauten an der hydrodynamischen Kupplung 5. Dabei werden zumindest drei Grundfunktionszustände unterschieden. Im ersten Grundfunktionszustand ist nur die hydrodynamische Kupplung 5 geschaltet. In diesem wird die am Eingang E anliegende Leistung nur über die hydrodynamische Kupplung 5 übertragen. Die schaltbare Kupplung 9 ist deaktiviert.

Im zweiten Grundfunktionszustand ist die schaltbare Kupplung 9 geschaltet. In diesem wird die am Eingang E anliegende Leistung nur über diese übertragen. Die hydrodynamische Kupplung 5 ist deaktiviert. Dies geschieht über die Veränderung des Anpressdruckes, so dass die Kupplung ohne Schlupf betrieben wird.

Im dritten Grundfunktionszustand sind beide Leistungszweige 10 und 11 aktiviert, d. h. es wird ein erster Leistungsanteil über die hydrodynamische Kupplung 5 übertragen und ein zweiter Leistungsanteil über die schaltbare Kupplung 9. Zusätzlich können unter einem weitern Aspekt die einzelnen Leistungsanteile auch unabhängig voneinander gesteuert werden. Dieser dritte Grundfunktionszustand beinhaltet eine zeitlich kurzzeitige gemeinsame Aktivierung oder aber eine Aktivierung über einen Hauptteil des Anfahrbereiches.

Im ersten Grundfunktionszustand, dem sogenannten Kupplungs- oder Wandlerbetrieb, wird dabei Betriebsmittel dem Arbeitsraum 8 über ein Betriebsmittelführungs- bzw. -versorgungssystem 16 zugeführt, wobei die Durchströmung der Anfahreinheit 1 in diesem Fall zentripetal erfolgt.

Die Anfahreinheit 1 umfasst ein Gehäuse 17, welches als ruhendes Gehäuse oder aber wie in dieser Figur dargestellt, als rotierendes Gehäuse in Form einer Primärradschale 18 ausgeführt ist, die drehfest mit dem Primärrad 6 verbunden ist oder mit diesem eine integrale Baueinheit bildet und das Sekundärrad 7 in axialer Richtung unter Bildung eines Nebenraumes 65 umschließt. Die Primärradschale 18 umschließt dabei das Sekundärrad 7 sowohl vollständig in Umfangsrichtung als auch axialer Richtung. Im Nebenraum 65, der vom Außenumfang des Sekundärrades 7 und dem Innenumfang 28 des Gehäuses 17 gebildet wird, ist die Stelleinrichtung 15 angeordnet. Diese bildet mit dem Innenumfang 28 des Gehäuses 17 einen ersten Betriebsmittelführungskanal oder -raum 19, dessen Druck die Stelleinrichtung 15 beaufschlagt. Des weiteren ist ein weiterer zweiter Betriebsmittelführungskanal oder -raum 66 vorgesehen, welcher im Bereich des Innendurchmessers dᵢ₈ des Arbeitsraumes oder unterhalb dessen mündet. Der erste Betriebsmittelführungskanal oder -raum 19 wird dabei für die Betriebsweise des hydrodynamischen Elementes im Kupplungs- oder Wandlerbetrieb je nach Ausgestaltung als hydrodynamische Kupplung 5 oder hier jedoch nicht dargestellt Wandler auch als Betriebsmittelzufuhrkanal oder -raum zum Arbeitsraum 8 genutzt und ist mit der Betriebsmittelzufuhrleitung 20 gekoppelt, während der zweite Betriebsmittelführungskanal oder -raum 66 in diesem Zustand als Abfuhrkanal 21 fungiert. Die schaltbare Kupplung 9 ist derart ausgestaltet, dass diese geeignet ist, im ersten Funktionszustand aufgrund des über den ersten Betriebsmittelführungskanal oder -raum 19 geführten Betriebsmittels geöffnet zu sein. Die schaltbare Kupplung 9 wird dabei in diesem Funktionszustand aufgrund des Druckes des Betriebsmittels im ersten Betriebsmittelführungskanal oder -raum 19 im geöffneten Zustand gehalten. Durch eine wahlweise Änderung der Funktion der einzelnen Betriebsmittelführungskanäle bzw. -räume 19, 66 kann die Durchströmungsrichtung der hydrodynamischen Komponente, insbesondere der hydrodynamischen Kupplung 5 auf einfache Art und Weise zwischen zentripetal und zentrifugal geändert werden.

Die Zufuhr zum ersten Betriebsmittelzufuhrkanal oder -raum 19 kann vielgestaltig ausgeführt werden. Diese erfolgt dabei beispielsweise über die als Hohlwelle 23 ausgeführte Ausgangswelle 24 der Anfahreinheit 1. Erfindungsgemäß sind dem Arbeitskreislauf Mittel 2 zur Beeinflussung des Übertragungsverhaltens, insbesondere zur Beeinflussung des Strömungskreislaufes des sich im Arbeitsraum 8 einstellenden Arbeitskreislaufes zugeordnet, welche als druckgesteuerte mechanische Einbauten 3 ausgeführt sind. Diese werden erfindungsgemäß über aus dem Betriebsmittelführungskanal oder -raum 19 abgezweigtes Betriebsmittel beaufschlagt. Dazu ist mindestens eine Verbindungsleitung 25 zwischen dem Betriebsmittelführungskanal oder -raum 19 und den druckgesteuerten mechanischen Einbauten 3, insbesondere den diesen zugeordneten Stelleinrichtungen 26 vorgesehen. Diese druckgesteuerten mechanischen Einbauten 3 können verschiedenartig ausgeführt sein. Allen gemeinsam ist jedoch, dass diese eine Ablenkung des Strömungskreislaufes des sich im Arbeitsraum 8 einstellenden Arbeitskreislaufes bewirken. Dazu sind diese als in einem Winkel zum Strömungskreislauf im Arbeitsraum 8 angeordnete Elemente ausgeführt oder als parallel zum Strömungskreislauf ausgebildete Führungselemente, beispielsweise in Form von Wänden oder Wandbereichen der Schaufelräder, die in ihrer Lage in axialer und/oder bei Ausführungen eines Schaufelrades mit in Umfangsrichtung unterteilten Segmenten in radialer Richtung verschiebbar sind. Beispiele für die konkrete Ausgestaltung sind in den nachfolgenden Figuren wiedergegeben. Entscheidend ist, dass keine zusätzliche Druckmittelquelle zur Beaufschlagung der durchgesteuerten mechanischen Einbauten erforderlich ist und der ohnehin zur Aktivierung und Deaktivierung der schaltbaren Kupplung 9 erforderliche Druck genutzt wird. Dabei erfolgt die Beaufschlagung der Stelleinrichtung 26 mit einem zum Druck im ersten Betriebsmittelführungskanal oder -raum 19 proportionalen Druck bzw. einem durch diesen bestimmten Differenzdruck. Dieser Differenzdruck wird vom Druck im ersten Betriebsmittelführungskanal oder -raum 19 bzw. einer mit diesem gekoppelten Verbindungsleitung 25 zur Stelleinrichtung 26 und dem Druck im Innenraum des Gehäuses 17 bzw. der Primärradschale 18, insbesondere dem Zwischenraum 30 zwischen den Schaufelrädern und dem Gehäuse gebildet.

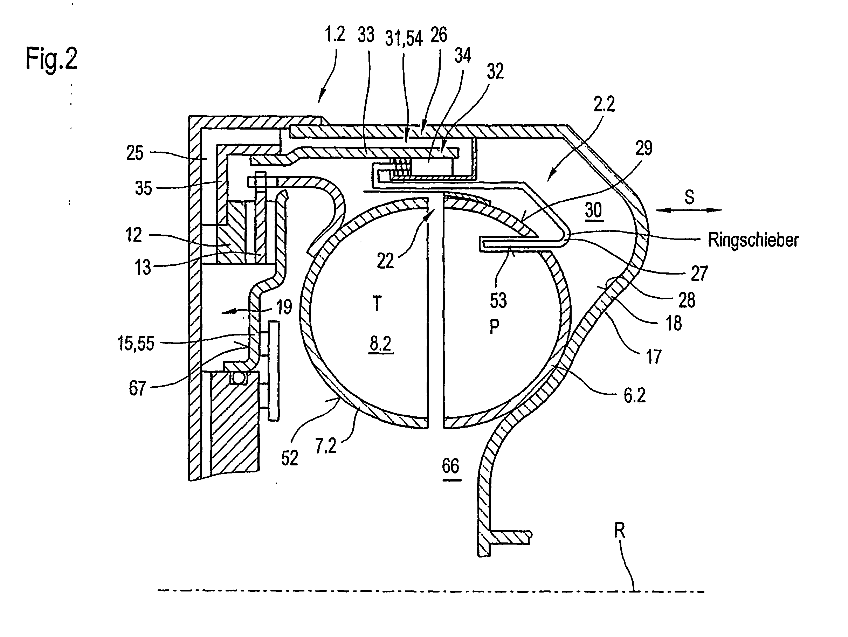

Die Figur 2 verdeutlicht eine erste Ausgestaltungsmöglichkeit einer Anfahreinheit 1.2 mit Mitteln 2.2 zur Beeinflussung des Übertragungsverhaltens in Form von sogenannten Ringschiebern 27, welche im Arbeitsraum 8.2 wirksam werden. Bei diesen handelt es sich um ring- oder teilringförmige Elemente, welche sich in axialer Richtung wenigstens teilweise durch ein Schaufelrad erstrecken, wobei der Innenumfang 53 dieser ring- oder teilringförmigen Elemente in einem Winkel zum Strömungskreislauf im Arbeitsraum 8.2 ausgerichtet ist, vorzugsweise nahezu senkrecht. Bei Ausführung als ringförmiges Element erstrecken sich lediglich in axialer Richtung ausgerichtete teilringförmige Verlängerungen an diesem in den Arbeitsraum 8.2 und durch die Wand eines der Schaufelräder 6.2, 7.2. Der Ringschieber 27 ist hier dem Primärschaufelrad 6.2 zugeordnet. Dieser ist am Primärschaufelrad 6.2 geführt und gegenüber diesem in axialer Richtung, d. h. parallel zur Rotationsachse R verschiebbar. Die Verschiebung erfolgt somit in den Arbeitsraum 8.2 hinein und im nicht beeinflussenden Zustand in den zwischen dem Innenumfang 28 des Gehäuses 17 oder der Primärradschale 18 und dem Außenumfang 29 der Schaufelräder, insbesondere des Primärrades gebildeten Zwischenraum 30 als Bestandteil des Gehäuseinnenraumes, wobei dann keine Beeinflussung des Strömungskreislaufes im Arbeitsraum 8 gegeben ist. Dem Ringschieber 27 ist eine Stelleinrichtung 31 zugeordnet. Diese entspricht der Stelleinrichtung 26 gemäß Figur 1. Diese ist vorzugsweise am Gehäuse 17, insbesondere der Primärradschale 18 gelagert und mit dem Ringschieber 27 gekoppelt. Im dargestellten Fall umfasst die Stelleinrichtung 31 eine mit Druckmittel betätigbare Zylinder-Kolbeneinheit 54, umfassend einen Zylinder 32, dessen Arbeitskolben 34 mit dem Ringschieber 27 verbunden ist. Die mit dem Ringschieber 27 gekoppelte Stirnseite 33 wird dabei vom Druck im Innenraum des Gehäuses 17 beaufschlagt, während eine von dieser Stirnseite abgewandten Stirnseite mit Druckmittel in Form von aus dem Betriebsmittelführungskanal oder - raum 19 über eine Verbindungsleitung 25 abgezweigtem Betriebsmittel beaufschlagbar ist. Der Zylinder 32 kann dabei vom Gehäuse 17 oder der Primärradschale 18 oder einem mit diesem ortsfest bzw. drehfest verbundenen Element gebildet werden. In diesem ist dann der Arbeitskolben 34 geführt. Die Verbindungsleitung zum Betriebsmittelführungskanal oder -raum 19, die mit 25 bezeichnet ist, ist dabei vorzugsweise als im Gehäuse integrierte Leitung und/oder Kanal und/oder Raum ausgeführt, wobei diese von separaten Leitungselementen oder Einbauten, hier im Gehäuse vorgesehenen Wänden 35 gebildet wird. Vorzugsweise erfolgt die Ausbildung der Leitungen durch Integration in Wandbereichen an der Primärradschale 18, separate Rohrleitungen sind ebenfalls denkbar. Gemäß einer besonders vorteilhaften Ausführung wie in Figur 2 dargestellt, ist die Verbindungsleitung 25 im Bereich der Anlenkung der ersten Kupplungsscheibe 12 der schaltbaren Kupplung 9 angeordnet. Somit kann sich der Druck im Betriebsmittelführungskanal und/oder -raum 19 in die Verbindungsleitung 25 fortpflanzen. Der Druck im Betriebsmittelführungskanal und/oder -raum 19 beaufschlagt dabei auch die Stelleinrichtung 15 in Form des Kolbens 55 zur Betätigung der schaltbaren Kupplung 9, welche ebenfalls an der Primärradschale 18 angelenkt ist, vorzugsweise an dieser drehfest jedoch gelenkig oder in axialer Richtung an dieser verschiebbar gelagert. Der Raum 19 wird dabei im wesentlichen zwischen dem Innenumfang 28 der Primärradschale 18 bzw. einem mit dieser drehfest gekoppelten Element und der vom Außenumfang 52 des Sekundärrades 8.2 wegweisenden Stirnseite 67 des Kolbens 55 begrenzt. Der Kolben 55 ist dabei im unbeaufschlagten Zustand durch den Druck im Betriebsmittelführungskanal oder -raum 19 vorgespannt, so dass in diesem Zustand die schaltbare Kupplung 9 geschlossen ist. Erst der Druck im Betriebsmittelzufuhrkanal oder -raum 19 bewirkt ein Aneinanderdrücken der einzelnen Kupplungselemente und damit eine Deaktivierung der schaltbaren Kupplung 9.

Je nach Abzweigung der Menge von Betriebsmittel und Ausgestaltung der Verbindungsleitung 25 und dem Druck im Innenraum des Gehäuses 17 gestattet sich dabei der am Kolben 34 wirksam werdende Druck. Dieser wird beispielsweise in einen Stellweg S für die axiale Verschiebung des Ringschiebers 27 umgewandelt.

Um im unbeeinflussten Zustand keine Behinderung des Ringschiebers 27 und bei Betätigung eine feste Zuordnung zum jeweiligen Schaufelrad zu haben, sollte der Ringschieber 27 und die diesem zugehörige Stelleinrichtung 31 mit der gleichen Drehzahl wie das Schaufelrad, an welchem dieser wirksam wird, rotieren. Daher erfolgt die Anlenkung bei Zuordnung zum Primärschaufelrad 6.2 vorrangig zu der drehfest mit diesem gekoppelten Primärradschale 18. Die Führung des Druckmittels in Form von aus dem Betriebsmittelzufuhrkanal 20, insbesondere dem mit dieser gekoppelten Betriebsmittelführungskanal oder -raum 19 abgezweigten Betriebsmittels kann, wie in Figur 2 dargestellt, um das Sekundärschaufelrad 7.2 erfolgen.

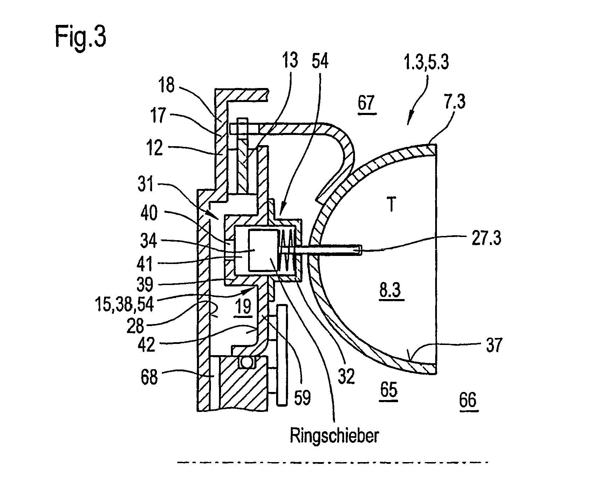

Wirkt gemäß Figur 2 der Ringschieber 27 auf den Arbeitskreislauf im Arbeitraum 8 über das Primärschaufelrad 6.2, so sind auch Ausführungen mit dieser Art von Einbauten in Form von Ringschiebern 27.3 am Sekundärschaufelrad 7.3 möglich. Eine derartige Ausführung ist in Figur 3 beschrieben. Der Grundaufbau der Anfahreinheit 1.3 entspricht dem in der Figur 1 beschriebenen, weshalb für gleiche Elemente die gleichen Bezugszeichen verwendet werden.

Zur Beeinflussung des Übertragungsverhaltens der hydrodynamischer Komponente, insbesondere der hydrodynamischen Kupplung 5 ist auch hier ein Ringschieber 27.3 vorgesehen, der dem Sekundärschaufelrad 7.3 zugeordnet ist. Dieser erstreckt sich dabei durch die Wand 36 des Sekundärschaufelrades 7.3 Der Ringschieber 27.3 ist in axialer Richtung in den Arbeitsraum 8.3 verschiebbar. Die Beschaufelung des Sekundärrades 7.3 weist dazu Schlitze auf. Im nicht wirksamen Zustand ist dieser in axialer Richtung derart verschoben, dass dieser sich mit seiner Außenkante außerhalb des Sekundärschaufelrades 7.3 befindet. Dem Ringschieber 27.3 ist eine Stelleinrichtung 31 zugeordnet, welche vorzugsweise ebenfalls als Zylinder-Kolbeneinheit 54 ausgeführt ist. Der Kolben 34 ist dabei mit dem Ringschieber 27.3 verbunden und ebenfalls in axialer Richtung im Zylinder 32 geführt. Der Zylinder 32 wird dabei von einem ortsfest am Gehäuse 17 oder im hier dargestellten Fall drehfest mit der Primärradschale 18 gekoppelten Element in Form des Kolbens 55 der der schaltbaren Kupplung 9 zugeordneten Stelleinrichtung 15 gebildet. Dieser bildet die mit Druckmittel beaufschlagbare Kammer 41, in welcher der Kolben 34 geführt wird. Der Kolben 34 ist dabei als Einzelkolben, Ring- oder Teilringkolben ausgeführt. Der Kolben 55 ist in axialer Richtung verschiebbar an der Primärradschale 18 geführt oder aber gegenüber dem Gehäuse 17 bzw. der Primärradschale 18 verschwenkbar gelagert, so dass unter Druckeinwirkung bei Beaufschlagung des Kolbens 55 der Kupplungseingang 12 mit dem drehfest mit dem Sekundärrad 7 gekoppelten Kupplungsausgang 13 eine Reibschlussverbindung bildet. Im dargestellten Fall sind alle Elemente als Blechformelemente ausgeführt. Dies gewährleistet eine relativ leichte Bauweise. Die Führung des Ringschiebers 27.3 erfolgt am Kolben 34 der Zylinder-Kolbeneinheit 54 der Stelleinrichtung 31. Der Kolben 55 der Stelleinrichtung 15 und der Zylinder 32 bilden dabei vorzugsweise eine Baueinheit 30. Der Zylinder 32 wird dabei durch entsprechende Formgebung des Kolbens 55 und einem zusätzlichen Element 39 gebildet.

Der zur Kammer 41 aus dem Betriebsmittelführungskanal oder -raum 19 abgezweigte Druckmittelstrom wird beispielsweise über eine mit diesem gekoppelte Verbindungsleitung 40 realisiert. Die Zufuhr zum Raum 19 erfolgt beispielsweise über eine Verbindungsleitung 68, welche vorzugsweise direkt im Gehäuse 17 bzw. der Wand der Primärradschale 18 integriert und mit dem Betriebsmittelzufuhrkanal 20 gekoppelt ist, in diesen und wird über den Raum 19 zur Zylinder-Kolbeneinheit 54 geführt, wobei die Führung entlang der vom Sekundärschaufelrad 7.3 abgewandten Stirnseite 42 des Kolbens 55 der Stelleinrichtung 15 der schaltbaren Kupplung 9 erfolgt. Der Betriebsmittelstrom wird somit hinter dem Kolben 55 geführt und bewirkt einen Druck auf den Kolben 55. Ferner wird eine Verbindung über die Verbindungsleitung 40 in der Wand der Zylinder-Kolbeneinheit 54, wobei der Zylinder 32 hier am Kolben 55 ausgebildet ist, realisiert. Auch hier erfolgt die Abzweigung entweder direkt aus dem Betriebsmittelführungskanal oder -raum 19, wie dargestellt und damit indirekt aus dem mit diesem gekoppelten, beispielsweise über die Verbindungsleitung 68 mit dem hier nicht dargestellten und mit der Betriebsmittelquelle gekoppelten Betriebsmittelzufuhrkanal 20.

Die in den Figuren 1 bis 3 dargestellten Ringschieber 27 und 27.3 sind dabei derart ausgeführt, dass diese in Umfangsrichtung vorzugsweise als wenigstens teilringförmiges Element vorliegen, so dass eine entsprechende Öffnung am Schaufelrad zur Führung bzw. der Realisierung des Eingriffes der Ringschieber 27, 27.3 vorgesehen ist und die Beschaufelung in den Bereichen geschützt ausgeführt ist.

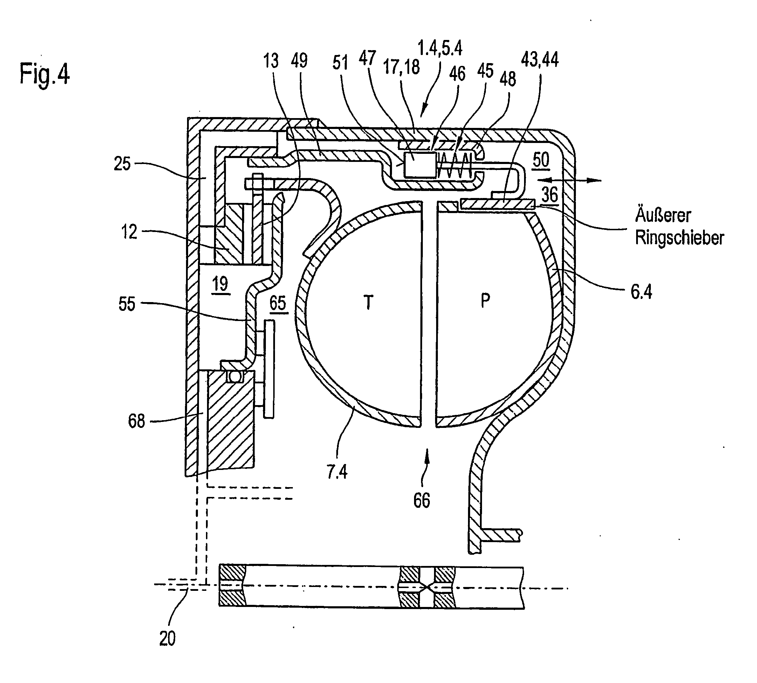

Zeigen die Figuren 2 und 3 druckmittelbetätigte mechanische Einbau 3, die direkt in den Arbeitskreislauf.im Arbeitsraum 8 eingreifen, verdeutlicht die Figur 4 eine Ausgestaltung, die durch die Verschiebung einzelner Teilbereiche der den Arbeitskreislauf führenden Wände charakterisiert ist. Die Figur 4 verdeutlicht dabei eine Ausgestaltung mit Verschiebbarkeit eines Wandbereiches 43 am Primärschaufelrad 6. Diese Verschiebbarkeit wird vorzugsweise in axialer Richtung realisiert, da dies durch eine besonders einfache Umsetzung charakterisiert ist. Der Grundaufbau der übrigen Anfahreinheit 1.4 entspricht im Wesentlichen dem in den Figuren 1 bis 3 beschriebenen, weshalb für gleiche Elemente auch hier die gleichen Bezugszeichen verwendet werden. Der Wandbereich 43 stellt dabei ein ringförmiges Element 44 dar, welches mittels einer druckmittelbetätigten Stelleinrichtung 45 betätigbar ist. Dabei umfasst die Stelleinrichtung 45 auch hier im einfachsten Fall vorzugsweise eine Zylinder-Kolbeneinheit 46, wobei der Kolben 47 wenigstens mittelbar mit dem ringförmigen Element 44 gekoppelt ist und sozusagen zusammen mit diesem einen äußeren Ringschieber bildet. Der Kolben 47 ist im Zylinder 48, der vom Gehäuse 17 bzw. der Primärradschale 18 und diesem zugeordneten Wandelementen 49 gebildet wird, geführt. Bei diesen zusätzlichen Wandelementen 49 handelt es sich vorzugsweise um Blechformteile, die ebenfalls mindestens mittelbar am Gehäuse 17 bzw. an der Primärradschale 18 befestigt sind und den Verbindungskanal 25 zur Beaufschlagung der in Verschiebungsrichtung während des Betriebes weisenden Stirnseite 51 des Kolbens 47 bilden. Die Beaufschlagung des Kolbens 47 erfolgt mit dem Differenzdruck aus dem sich über die Verbindungsleitung 25 zur Stirnseite 51 fortpflanzenden Druck aus dem ersten Betriebsmittelführungskanal oder-raum 19 und dem Druck im Innenraum des Gehäuses 17. Der Verbindungskanal 25 ist mit dem Betriebsmittelzuführkanal, insbesondere dem Betriebsmittelkanal oder -raum 19 bzw. dem mit diesem gekoppelten Betriebsmittelzufuhrkanal 20 verbunden.

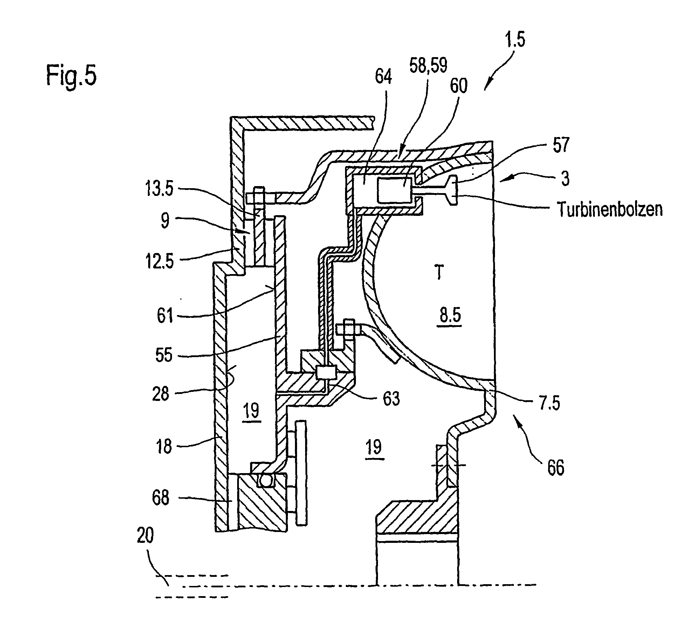

Die Figur 5 verdeutlicht eine weitere Alternativausführung gemäß Figur 3. Bei diesem werden anstatt eines Ringschiebers mechanische Einbauten 3 in Form von Turbinenbolzen 57 verwendet. Die Beaufschlagung dieser erfolgt analog wie in der Figur 3 für den Ringschieber 27.3 beschrieben. Bei Figur 5 sind die Turbinenbolzen 57 am Sekundärschaufelrad 7.5 geführt. Diese erstrecken sich im betätigten Zustand in axialer Richtung in den Arbeitsraum 8 hinein. Die Zylinder-Kolbeneinheit 58 der Stelleinrichtung 59 ist dabei beispielsweise am Sekundärschaufelrad 7.5 gelagert bzw. drehfest mit diesem verbunden. Ferner gekoppelt mit dem Sekundärschaufelrad 7.5 ist auch hier der Kolben 55 zur Beaufschlagung der schaltbaren Kupplung 9, insbesondere der beiden Kupplungsscheiben 12.5 und 13.5, wobei die Kupplungsscheibe 13.5 drehfest mit dem Sekundärschaufelrad 7.5 verbunden ist. Der Kolben 55, der drehfest, jedoch in axialer Richtung verschiebbar oder gelenkig an der Primärradschale 18 gelagert ist, dient dabei der Führung des Druckmittels zur Zylinder-Kolbeneinheit 58. Allerdings ist in diesem Fall aufgrund der Kopplung zwischen Kolben 55 und Zylinderkolbeneinheit 58 eine Relativbewegung in Umfangsrichtung zuzulassen. Auch hier ist ein Verbindungskanal 63 vorgesehen, welcher entweder direkt mit dem Betriebsmittelzufuhrkanal 20 oder aber dem Betriebsmittelzufuhrkanal oder-raum 19 verbunden ist. Die Kopplung kann dabei wenigstens mittelbar, d. h. direkt oder auch indirekt über weitere Teilkanäle erfolgen. Der Betriebsmittelzufuhrkanal oder -raum 19 bzw. das dort geführte Betriebsmittel und die sich an der vom Sekundärschaufelrad 7.5 abgewandten Stirnseite 61 einstellende Druckdifferenz dient der Beaufschlagung der schaltbaren Kupplung 9, insbesondere der Wirkung des Kolbens 55 auf die beiden miteinander in Wirkverbindung bringbaren Kupplungsscheiben 12.5 und 13.5. Die Verbindungsleitung 63 ist dabei mit dem zwischen Kolben 55 und Innenumfang 28 der Primärradschale 18 gebildeten Betriebsmittelführungskanal oder -raum 19 gekoppelt. Aus diesem wird über den Kolben 55 eine weitere Verbindungsleitung 68 geführt, die mit dem Zylinder, insbesondere der Arbeitskammer 64 der Zylinder-Kolbeneinheit 58 verbunden ist. Die sich dabei in der Arbeitskammer 64 einstellenden Druckverhältnisse dienen der Verschiebung des Turbinenbolzens 57. Dieser ist dabei mit dem in der Arbeitskammer 64 geführten Kolben 60 verbunden.

Die Lagerung bzw. Anbindung des Kolbens 55 kann auch am Sekundärrad 7.5 erfolgen.

Für alle in den Figuren 1 bis 5 dargestellten Ausführungen gilt, dass es sich hierbei lediglich um Beispiele handelt, wobei der Schutzumfang nicht auf diese beschränkt ist. Die konkrete konstruktive Ausgestaltung hängt dabei von der Ausgestaltung der Schaufelräder sowie des Gehäuses bzw. der Primärradschale ab und ferner den Einbaugegebenheiten sowie den Platzgegebenheiten in den Betriebsmittelzufuhrbindekanälen oder -räumen.

### Bezugszeichenliste

- 1, 1.2, 1.3 1.4, 1.5, 1.6: Anfahreinheit
- 2, 2.2, 2.3 2.4, 2.5, 2.6: Mittel zur Beeinflussung des Übertragungsverhaltens
- 3: druckmittelgesteuerte mechanische Einbauten
- 4, 4.3, 4.4, 4.5, 4.6,: Anfahrelement
- 5, 5.3, 5.4, 5.5, 5.6: hydrodynamische Kupplung
- 6, 6.3, 6.4, 6.5, 6.6: Primärschaufelrad
- 7, 7.3, 7.4, 7.5,7.6: Sekundärschaufelrad
- 8, 8.3, 8.4, 8.5, 8.6: Arbeitsraum
- 9: schaltbare Kupplung
- 10: erster Leistungszweig
- 11: zweiter Leistungszweig
- 12: Kupplungseingangsscheibe
- 13: Kupplungsausgangsscheibe
- 14: Stelleinrichtung
- 15: Stelleinrichtung
- 16: Betriebsmittelführungs- und Versorgungssystem
- 17: Gehäuse
- 18: Primärradschale
- 19: erster Betriebsmittelführungskanal oder -raum
- 20: Betriebsmittelzufuhrkanal
- 21: Abfuhrkanal
- 22: radial äußerer Bereich
- 23: Hohlwelle
- 24: Eingangswelle
- 25: Verbindungsleitung
- 26: Stelleinrichtung
- 27, 27.3: Ringschieber
- 28: Innenumfang
- 29: Außenumfang
- 30: Zwischenraum
- 31: Stelleinrichtung
- 32: Zylinder
- 33: von der Kopplung des Arbeitskolbens mit dem Ringschieber abgewandte Stirnseite des Kolbens
- 34: Arbeitskolben
- 35: Wand
- 36: Wand
- 37: Innenumfang
- 38: Baueinheit
- 39: Element
- 40: Verbindungskanal zum Kolben
- 41: Arbeitskammer
- 42: vom Sekundärschaufelrad abgewandte Kolbenseite
- 43: Wandbereich
- 44: ringförmiges Element
- 45: Stelleinrichtung
- 46: Zylinder-Kolbeneinheit
- 47: Kolben
- 48: Zylinder
- 49: Wandelement
- 50: Innenwand
- 51: Stirnseite
- 52: Außenumfang
- 53: Innenumfang
- 54: Zylinder-Kolbeneinheit
- 55: Kolben
- 56: Raum
- 57: Turbinenbolzen
- 58: Zylinder-Kolbeneinheit
- 59: Stelleinrichtung
- 60: Kolben
- 61: Stirnseite
- 62: Verbindungsleitung
- 63: Arbeitskammer
- 64: Nebenraum
- 65: zweiter Betriebsmittelführungskanal oder -raum
- 68: Verbindungsleitung

## Patentansprüche

1. Anfahreinheit (1, 1.2, 1.3, 1.4, 1.5, 1.6)
1.1 mit einem mit einem Antrieb koppelbaren Eingang (E) und einem mit einem Abtrieb koppelbaren Ausgang (A);
1.2 mit einem Anfahrelement (4, 4.3, 4.4, 4.5, 4.6) in Form eines hydrodynamischen Bauelementes (5, 5.2, 5.3, 5.4, 5.5, 5.6), umfassend ein Primärschaufelrad (6, 6.2, 6.3, 6.4, 6.5, 6.6) und ein Sekundärschaufelrad (7, 7.2, 7.3, 7.4, 7.5, 7.6), die miteinander einen mit Betriebsmittel befüllbaren Arbeitsraum (8, 8.2, 8.3, 8.4, 8.5, 8.6) bilden;
1.3 mit einer schaltbaren Kupplung (9), umfassend wenigstens zwei miteinander direkt oder indirekt über weitere Übertragungsmittel reibschlüssig in Wirkverbindung bringbare Kupplungselemente - ein erstes Kupplungselement (12) und ein zweites Kupplungselement (13), die jeweils mit dem Eingang (E) und dem Ausgang (A) wenigstens mittelbar drehfest gekoppelt sind -, die über eine Kupplungsstelleinrichtung (15, 38) betätigt werden;
1.4 mit einem wenigstens ein Schaufelrad (6, 7) in axialer Richtung unter Bildung wenigstens eines Betriebsmittelführungskanals oder -raumes (19) umschließenden ruhenden oder drehfest mit dem Primärschaufelrad (6) gekoppelten Gehäuse (17, 18); wobei
1.5 die Kupplungsstelleinrichtung (15, 38) der schaltbaren Kupplung (9) wenigstens mittelbar mit dem Betriebsmittelführungskanal oder -raum (19) als Druckquelle gekoppelt ist, wobei der Betriebsmittelführungskanal oder -raum (19) wenigstens mittelbar mit einer Betriebsmittelzufuhrleitung (20) verbindbar ist;
1.6 mit Mitteln (2) zur Beeinflussung des Übertragungsverhaltens des hydrodynamischen Bauelementes (5);
**gekennzeichnet durch** die folgenden Merkmale:
1.7 die Mittel (2) umfassen druckmittelbetätigbare mechanische Einbauten (3), die wenigstens mittelbar auf den sich im Arbeitsraum (8, 8.2, 8.3, 8.4, 8.5, 8.6) einstellenden Arbeitskreislauf wirken und welchen eine Stelleinrichtung (26, 31) zugeordnet ist; wobei
1.8 die mechanischen Einbauten (3) in Form von separaten, in den Arbeitsraum (8) einführbaren Elementen oder in Form eines Teilbereiches der die Strömung im Arbeitsraum führenden Wände, der in axialer Richtung verschiebbar ist, ausgebildet sind;
1.9 die druckmittelbetätigten mechanischen Einbauten (3) werden mit Druckmittel aus dem Zufuhrkanal (20) oder dem ersten Betriebsmittelführungskanal oder -raum (19) beaufschlagt, wobei die Position der druckmittelbetätigbaren mechanischen Einbauten (3) gegenüber dem Arbeitsraum (8) eine Funktion des Differenzdruckes aus dem Druck des aus dem Zufuhrkanal (20) oder dem ersten Betriebsmittelführungskanal oder -raum (19) abgezweigten Druckmittels und dem Druck im Innenraum des Gehäuses (17, 18) im Bereich der Stelleinrichtung (26, 31) ist.

2. Anfahreinheit (1, 1.2, 1.3, 1.4, 1.5, 1.6) nach Anspruch 1, **dadurch gekennzeichnet, dass** die druckmittelbetätigten mechanischen Einbauten (3) auf einem beliebigen Durchmesser zwischen dem Innendurchmesser und dem Außendurchmesser des Arbeitsraumes (8, 8.2, 8.3, 8.4, 8.5, 8.6) in diesem wirksam werden.

3. Anfahreinheit (1, 1.2, 1.3, 1.4, 1.5, 1.6) nach einem der Ansprüche 1 oder 2, **dadurch gekennzeichnet, dass** die druckmittelbetätigten mechanischen Einbauten (3) entweder am Gehäuse (17, 18) und/oder an einem der beiden Schaufelräder - Primärschaufelrad (6, 6.2, 6.3, 6.4, 6.5, 6.6) oder Sekundärschaufelrad (7, 7.2, 7.3, 7.4, 7.5, 7.6) geführt sind.

4. Anfahreinheit (1, 1.2, 1.4, 1.6) nach einem der Ansprüche 1 bis 3, **dadurch gekennzeichnet, dass** die den einzelnen mechanischen Einbauten zugeordneten Stelleinrichtungen (31, 45) am ruhenden oder drehfest mit dem Primärschaufelrad (6, 6.2, 6.4. 6.6) gekoppelten Gehäuse (17, 18) befestigt sind.

5. Anfahreinheit (1, 1.3, 1.5,) nach einem der Ansprüche 1 bis 3, **dadurch gekennzeichnet, dass** die den einzelnen mechanischen Einbauten (3) zugeordneten Stelleinrichtungen (31, 59) an der Kupplungsstelleinrichtung (15, 38) der schaltbaren Kupplung (9) angeordnet sind bzw. zum Teil von dieser gebildet werden.

6. Anfahreinheit (1, 1.2, 1.3, 1.4, 1.5, 1.6) nach einem der Ansprüche 4 oder 5, **dadurch gekennzeichnet, dass** die Stelleinrichtung (26, 31, 45, 59) eine Zylinder-Kolbeneinheit (46, 54, 58) umfasst, wobei der Kolben (34, 47) mit den mechanischen Einbauten (3) verbunden ist.

7. Anfahreinheit (1, 1.2, 1.3, 1.4, 1.5, 1.6) nach Anspruch 6, **dadurch gekennzeichnet, dass** der Zylinder (39, 48) von der Wand des Gehäuses (17, 18) oder aber einem separaten Einbauteil im Gehäuse (17, 18) oder in der Wand, insbesondere dem Kolben (55), der Kupplungsstelleinrichtung (15, 38) der schaltbaren Kupplung (9) gebildet wird.

8. Anfahreinheit (1, 1.2, 1.3, 1.4, 1.5, 1.6) nach einem der Ansprüche 1 bis 7, **dadurch gekennzeichnet, dass** das Druckmittel über wenigstens eine mit dem Betriebsmittelzufuhrkanal (20) und/oder dem Betriebsmittelführungskanal oder -raum (19) wenigstens mittelbar verbundene Verbindungsleitung (25) zur Stelleinrichtung (26, 45, 59) geführt wird.

9. Anfahreinheit (1, 1.2, 1.3, 1.4, 1.5, 1.6) nach Anspruch 8, **dadurch gekennzeichnet, dass** die Verbindungsleitung (25) im Gehäuse (17, 18) geführt ist.

10. Anfahreinheit (1, 1.2, 1.3, 1.4, 1.5, 1.6) nach einem der Ansprüche 8 oder 9, **dadurch gekennzeichnet, dass** die Verbindungsleitung (25) über einen Zwischenraum zwischen der Kupplungsstelleinrichtung (15, 38) der schaltbaren Kupplung (9) und einem Innenumfang (28) des Gehäuses (117) mit der Stelleinrichtung (26, 45, 59) der mechanischen Einbauten (3) gekoppelt ist.

11. Anfahreinheit (1, 1.5) nach einem der Ansprüche 8 bis 10, **dadurch gekennzeichnet, dass** die Verbindungsleitung (25) mit einer sich in der Kupplungsstelleinrichtung (15, 38) der schaltbaren Kupplung (9) erstreckenden Leitung bzw. an dieser angeordneten Leitung gekoppelt ist.

12. Anfahreinheit (1, 1.2, 1.3, 1.4, 1.5, 1.6) nach einem der Ansprüche 1 bis 11, **dadurch gekennzeichnet, dass** die druckmittelbetätigten mechanischen Einbauten (3) einen in axialer Richtung verschiebbaren Ringschieber (27, 27.3) umfassen, der von einem sich in Umfangsrichtung erstreckenden wenigstens teilringförmigen Element gebildet wird.

13. Anfahreinheit (1, 1.2, 1.3, 1.4, 1.5, 1.6) nach einem der Ansprüche 1 bis 11, **dadurch gekennzeichnet, dass** die druckmittelbetätigten mechanischen Einbauten von einem in axialer Richtung verschiebbaren bolzenförmigen Element (57) gebildet werden.

14. Anfahreinheit (1, 1.2, 1.3, 1.4, 1.5, 1.6) nach einem der Ansprüche 1 bis 11, **dadurch gekennzeichnet, dass** die mechanischen Einbauten yon einem Teilbereich der Wand eines Schaufelrades (7.5) gebildet werden, der zur Führung des Strömungskreislaufes dient.

15. Anfahreinheit (1, 1.2, 1.4) nach einem der Ansprüche 1 bis 14, **dadurch gekennzeichnet, dass** die druckmittelbetätigten mechanischen Einbauten (3) dem Primärschaufelrad (6, 6.2, 6.4) zugeordnet sind.

16. Anfahreinheit (1, 1.3, 1.5) nach einem der Ansprüche 1 bis 14, **dadurch gekennzeichnet, dass** die druckmittelbetätigten mechanischen Einbauten (3) dem Sekundärschaufelrad (7, 7.3, 7.5) zugeordnet sind.

17. Anfahreinheit (1; 1.2; 1.3; 1.4; 1.5) nach einem der Ansprüche 1 bis 16, **dadurch gekennzeichnet, dass** druckmitttelbetätigte mechanischen Einbauten (3) in den Spalt zwischen den einzelnen Schaufelrädern (6, 7) einbringbar sind.

## Claims

1. A starting unit (1, 1.2, 1.3, 1.4, 1.5, 1.6)
1.1 with an input (E) which can be coupled with a drive and an output (A) which can be coupled with power take-off;
1.2 with a starting element (4, 4.3, 4.4, 4.5, 4.6) in the form of a hydrodynamic component (5, 5.2, 5.3, 5.4, 5.5, 5.6), comprising a primary blade wheel (6, 6.2, 6.3, 6.4, 6.5, 6.6) and a secondary blade wheel (7, 7.2, 7.3, 7.4, 7.5, 7.6) which jointly form a working chamber (8, 8.2, 8.3, 8.4, 8.5, 8.6) which can be filled with an operating medium;
1.3 with a switchable clutch (9), comprising at least two clutch elements which can be brought in operative connection in a frictionally engaged manner either directly or indirectly via further transfer means, namely a first clutch element (12) and a second clutch element (13) which are each coupled in a torsionally rigid manner at least indirectly with the input (E) and the output (A) and which are actuated by means of a clutch actuating device (15, 38);
1.4 with a housing (17, 18) which is stationary or coupled in a torsionally rigid manner with the primary blade wheel (6) and encloses at least one blade wheel (6, 7) in the axial direction by forming at least one operating-medium guide conduit or chamber (19),
1.5 with the clutch actuating device (15, 38) of the switchable clutch (9) being coupled at least indirectly with the operating-medium guide conduit or chamber (19) as the pressure source, with the operating-medium guide conduit or chamber (19) being connected at least indirectly with an operating medium supply line (20);
1.6 with means (2) for influencing the transmission behavior of the hydrodynamic component (5);
**characterized in that**
1.7 the means (2) comprise mechanical built-in components (3) which can be actuated by pressure medium and which have an influence at least indirectly on the working circulation obtained in the working chamber (8, 8.2, 8.3, 8.4, 8.5, 8.6) and which are associated with an actuating device (26, 31), with
1.8 the mechanical built-in components (3) are arranged in the form of separate elements to be introduced into the working chamber (8) or in the form of a partial section of the walls guiding the flow into the working chamber which is displaceable in the axial direction;
1.9 the mechanical elements (3) which are actuated by the pressure medium are pressurized with pressure medium from the supply conduit (20) or the first operating-medium guide conduit or chamber (19), with the position of the mechanical built-in components (3) to be actuated by the pressure medium relative to the working chamber (8) being a function of the differential pressure between the pressure of the pressure medium branched off from the supply conduit (20) or the first operating-medium guide conduit or chamber (19) and the pressure in the interior space of the housing (17, 18) in the region of the actuating device (26, 31).

2. A starting unit (1, 1.2, 1.3, 1.4, 1.5, 1.6) according to claim 1, **characterized in that** the mechanical built-in components (3) become effective on a random diameter between the inner diameter and the outer diameter of the working chamber (8, 8.2, 8.3, 8.4, 8.5, 8.6) in the same.

3. A starting unit (1, 1.2, 1.3, 1.4, 1.5, 1.6) according to one of the claims 1 or 2, **characterized in that** the mechanical built-in components (3) which are actuated by the pressure medium are guided either on the housing (17, 18) and/or on one of the two blade wheels, the primary blade wheel (6, 6.2, 6.3, 6.4, 6.5, 6.6) or the secondary blade wheel (7, 7.2, 7.3, 7.4, 7.5, 7.6).

4. A starting unit (1, 1.2, 1.4, 1.6) according to one of the claims 1 to 3, **characterized in that** the actuating devices (31, 45) associated with the individual mechanical built-in components are fastened to the housing (17, 18) which is stationary or coupled in a torsionally rigid manner with the primary blade wheel (6, 6.2, 6.4, 6.6).

5. A starting unit (1, 1.3, 1.5,) according to one of the claims 1 to 3, **characterized in that** the actuating devices (31, 59) associated with the individual built-in components (3) are arranged on the clutch actuating device (15, 38) of the switchable clutch (9) or are partly formed by the same.

6. A starting unit (1, 1.2, 1.3, 1.4, 1.5, 1.6) according to one of the claims 4 or 5, **characterized in that** the actuating device (26, 31, 45, 59) comprises a cylinder-piston unit (46, 54, 58), with the piston (34, 47) being connected with the mechanical built-in components (3).

7. A starting unit (1, 1.2, 1.3, 1.4, 1.5, 1.6) according to claim 6, **characterized in that** the cylinder (39, 48) is formed by the wall of the housing (17, 18) or a separate built-in component in the housing (17, 18) or in the wall, especially the piston (55), the clutch actuating device (15, 38) of the switchable clutch (9).

8. A starting unit (1, 1.2, 1.3, 1.4, 1.5, 1.6) according to one of the claims 1 to 7, **characterized in that** the pressure medium is guided to the actuating device (26, 45, 59) via at least one connecting line (25) connected at least indirectly with the operating-medium supply conduit (20) and/or the operating-medium guide conduit or chamber (19).

9. A starting unit (1, 1.2, 1.3, 1.4, 1.5, 1.6) according to claim 8, **characterized in that** the connecting line (25) is guided in the housing (17, 18).

10. A starting unit (1, 1.2, 1.3, 1.4, 1.5, 1.6) according to one of the claims 8 or 9, **characterized in that** the connecting line (25) is coupled with the actuating device (26, 45, 59) of the mechanical built-in components (3) via a cavity between the clutch actuating device (15, 38) of the switchable clutch (9) and an inside circumference (28) of the housing (17).

11. A starting unit (1, 1.5) according to one of the claims 8 to 10, **characterized in that** the connecting line (25) is coupled with a line extending in the clutch actuating device (15, 38) or the switchable clutch (9) or a line arranged on the same.

12. A starting unit (1, 1.2, 1.3, 1.4, 1.5, 1.6) according to one of the claims 1 to 11, **characterized in that** the mechanical built-in components (3) which are actuated by the pressure medium comprise a ring slide (27, 27.3) which is displaceable in the axial direction and which is formed by an element extending in the circumferential direction and having the shape of a partial ring.

13. A starting unit (1, 1.2, 1.3, 1.4, 1.5, 1.6) according to one of the claims 1 to 11, **characterized in that** the mechanical built-in components which are actuated by the pressure medium are formed by a bolt-like element (57) which is displaceable in the axial direction.

14. A starting unit (1, 1.2, 1.3, 1.4, 1.5, 1.6) according to one of the claims 1 to 11, **characterized in that** the mechanical built-in components are formed by a partial section of the wall of a blade wheel (7.5) which is used for guiding the flow circulation.

15. A starting unit (1, 1.2, 1.4) according to one of the claims 1 to 14, **characterized in that** the mechanical built-in components (3) which are actuated by the pressure medium are associated with the primary blade wheel (6, 6.2, 6.4).

16. A starting unit (1, 1.2, 1.4) according to one of the claims 1 to 14, **characterized in that** the mechanical built-in components (3) which are actuated by the pressure medium are associated with the secondary blade wheel (7, 7.3, 7.5).

17. A starting unit (1; 1.2; 1.3; 1.4; 1.5) according to one of the claims 1 to 16, **characterized in that** the mechanical built-in components (3) which are actuated by the pressure medium can be introduced into the gap between the individual blade wheels (6, 7).

## Revendications

1. Unité de démarrage (1, 1.2, 1.3, 1.4, 1.5, 1.6)
1.1 avec une entrée (E) apte à être couplée à un groupe moteur et avec une sortie (A) apte à être couplée à un groupe d'organes menés ;
1.2 avec un élément de démarrage (4, 4.3, 4.4, 4.5, 4.6) sous forme de composant hydrodynamique (5, 5.2, 5.3, 5.4, 5.5, 5.6), comprenant une roue à aubes primaire (6, 6.2, 6.3, 6.4, 6.5, 6.6) et une roue à aubes secondaire (7, 7.2, 7.3, 7.4, 7.5, 7.6) formant à elles deux une enceinte de travail (8, 8.2, 8.3, 8.4, 8.5, 8.6) apte à être remplie de fluide de travail ;
1.3 avec un embrayage commutable (9) comprenant au moins deux éléments d'embrayage - un premier élément d'embrayage (12) et un deuxième élément d'embrayage (13) couplés chacun, solidaires en rotation, du moins indirectement à l'entrée (E) et à la sortie (A) - qui sont aptes à être amenés, directement ou indirectement par l'intermédiaire d'autres moyens de transmission, à agir conjointement par une liaison par friction et qui sont actionnés par un servomécanisme d'embrayage (15, 38) ;
1.4 avec au moins un carter (17, 18) fixe ou solidarisé en rotation à la roue à aubes primaire (6), ce carter entourant au moins une roue à aubes (6, 7) suivant la direction axiale en ménageant au moins un canal ou une enceinte (19) véhiculant le fluide de travail ;
1.5 le servomécanisme (15, 38) de l'embrayage commutable (9) étant couplé du moins indirectement au canal ou à l'enceinte (19) véhiculant le fluide de travail et faisant office de source de pression, le canal ou l'enceinte (19) véhiculant le fluide de travail (19) étant apte à être reliée du moins indirectement à un conduit d'alimentation (20) en fluide de travail ;
1.6 avec des moyens (2) destinés à influencer le comportement en transmission du composant hydrodynamique (5) ;
**caractérisé par** les particularités suivantes :
1.7 les moyens (2) comprennent des éléments mécaniques encastrés (3) aptes à être actionnés par un fluide sous pression et qui agissent du moins indirectement sur le circuit de travail se formant dans l'enceinte de travail (8, 8.2, 8.3, 8.4, 8.5, 8.6) et auxquels est associé un servomécanisme (26, 31) ;
1.8 les éléments mécaniques encastrés (3) étant réalisés sous forme d'éléments distincts aptes à être introduits dans l'enceinte de travail (8) ou sous forme d'une partie des parois guidant le flux dans l'enceinte de travail qui est mobile en coulissement suivant la direction axiale ;
1.9 les éléments mécaniques encastrés (3) aptes à être actionnés par un fluide sous pression subissent la pression de ce fluide provenant du canal d'alimentation (20) ou du premier canal ou de la première enceinte (19) véhiculant le fluide de travail, la position des éléments mécaniques encastrés (3) aptes à être actionnés par un fluide sous pression par rapport à l'enceinte de travail (8) étant fonction de la pression différentielle obtenue à partir de la pression du fluide sous pression dérivé du canal d'alimentation (20) ou du premier canal ou de la première enceinte (19) véhiculant le fluide de travail et de la pression régnant à l'intérieur du carter (17, 18) dans la région du servomécanisme (26, 31).

2. Unité de démarrage (1, 1.2, 1.3, 1.4, 1.5, 1.6) selon la revendication 1, **caractérisée en ce que** les éléments mécaniques encastrés (3) aptes à être actionnés par un fluide sous pression deviennent actifs sur un diamètre quelconque entre le diamètre intérieur et le diamètre extérieur de l'enceinte de travail (8, 8.2, 8.3, 8.4, 8.5, 8.6).

3. Unité de démarrage (1, 1.2, 1.3, 1.4, 1.5, 1.6) selon l'une quelconque des revendications 1 ou 2, **caractérisée en ce que** les éléments mécaniques encastrés (3) aptes à être actionnés par un fluide sous pression sont guidés soit sur le carter (17, 18) et/ou sur l'une des deux roues à aubes - la roue à aubes primaire (6, 6.2, 6.3, 6.4, 6.5, 6.6) ou la roue à aubes secondaire (7, 7.2, 7.3, 7.4, 7.5, 7.6).

4. Unité de démarrage (1, 1.2, 1.4, 1.6) selon l'une quelconque des revendications 1 à 3, **caractérisée en ce que** les servomécanismes (31, 45) associés aux différents éléments mécaniques encastrés sont fixés sur le carter (17, 18) fixe ou solidarisé en rotation à la roue à aubes primaire (6, 6.2, 6.4, 6.6).

5. Unité de démarrage (1, 1.3, 1.5) selon l'une quelconque des revendications 1 à 3, **caractérisée en ce que** les servomécanismes (31, 59) associés aux différents éléments mécaniques encastrés (3) sont disposés sur le servomécanisme (15, 38) de l'embrayage commutable (9) ou sont formés en partie par ce dernier.

6. Unité de démarrage (1, 1.2, 1.3, 1.4, 1.5, 1.6) selon l'une quelconque des revendications 4 ou 5, **caractérisée en ce que** le servomécanisme (26, 31, 45, 59) comprend un ensemble cylindre-piston (46, 54, 58), le piston (34, 47) étant relié aux éléments mécaniques encastrés (3).

7. Unité de démarrage (1, 1.2, 1.3, 1.4, 1.5, 1.6) selon la revendication 6, **caractérisée en ce que** le cylindre (39, 48) est formé par la paroi du carter (17, 18) ou alors par un élément encastrable séparé prévu dans le carter (17, 18) où dans la paroi, notamment dans le piston (55), du servomécanisme (15, 38) de l'embrayage commutable (9).

8. Unité de démarrage (1, 1.2, 1.3, 1.4, 1.5, 1.6) selon l'une quelconque des revendications 1 à 7, **caractérisée en ce que** le fluide sous pression est véhiculé vers le servomécanisme (26, 45, 59) dans au moins une conduite de liaison (25) reliée du moins indirectement avec le canal d'alimentation en fluide de travail (20) et/ou le canal ou l'enceinte (19) véhiculant le fluide de travail.

9. Unité de démarrage (1, 1.2, 1.3, 1.4, 1.5, 1.6) selon la revendication 8, **caractérisée en ce que** la conduite de liaison (25) est posée dans le carter (17,18).

10. Unité de démarrage (1, 1.2, 1.3, 1.4, 1.5, 1.6) selon l'une quelconque des revendications 8 ou 9, **caractérisée en ce que** la conduite de liaison (25) est couplée au servomécanisme (26, 45, 59) des éléments mécaniques encastrés (3) par l'intermédiaire d'un espace ménagé entre le servomécanisme (15, 38) de l'embrayage commutable (9) et un pourtour interne (28) du carter (17).

11. Unité de démarrage (1, 1.5) selon l'une quelconque des revendications 8 à 10, **caractérisée en ce que** la conduite de liaison (25) est couplée à une conduite s'étendant dans le servomécanisme (15, 38) de l'embrayage commutable (9) ou à une conduite disposée sur celui-ci.

12. Unité de démarrage (1, 1.2, 1.3, 1.4, 1.5, 1.6) selon l'une quelconque des revendications 1 à 11, **caractérisée en ce que** les éléments mécaniques encastrés (3) actionnés par un fluide sous pression comprennent un anneau obturateur (27, 27.3) qui est mobile en coulissement suivant la direction axiale et qui est formé par un élément du moins partiellement annulaire s'étendant suivant la direction circonférentielle.

13. Unité de démarrage (1, 1.2, 1.3, 1.4, 1.5, 1.6) selon l'une quelconque des revendications 1 à 11, **caractérisée en ce que** les éléments mécaniques encastrés actionnés par un fluide sous pression sont formés par un élément en forme d'axe (57) mobile en coulissement suivant la direction axiale.

14. Unité de démarrage (1, 1.2, 1.3, 1.4, 1.5, 1.6) selon l'une quelconque des revendications 1 à 11, **caractérisée en ce que** les éléments mécaniques encastrés sont formés par une partie de la paroi d'une roue à aubes (7.5) servant à guider le circuit d'écoulement.

15. Unité de démarrage (1, 1.2, 1.4) selon l'une quelconque des revendications 1 à 14, **caractérisée en ce que** les éléments mécaniques encastrés (3) actionnés par un fluide sous pression sont associés à la roue à aubes primaire (6, 6.2, 6.4).

16. Unité de démarrage (1, 1.3, 1.5) selon l'une quelconque des revendications 1 à 14, **caractérisée en ce que** les éléments mécaniques encastrés (3) actionnés par un fluide sous pression sont associés à la roue à aubes secondaire (7, 7.3, 7.5).

17. Unité de démarrage (1, 1.2, 1.3, 1.4, 1.5) selon l'une quelconque des revendications 1 à 16, **caractérisée en ce que** les éléments mécaniques encastrés (3) actionnés par un fluide sous pression sont aptes à être introduits dans la fente ménagée entre les différentes roues à aubes (6, 7).
